# EUROPEAN PATENT APPLICATION

(11) **EP 4 831 225 A1**
(43) Date of publication of application: **28.10.2026**
(21) Application number: 24906981.6
(22) Date of filing: 11.11.2024
(51) Int. Cl.: C08J 5/18, B65D 65/02

(54) **POLYVINYL ALCOHOL-BASED FILM**

(30) Priority: 22.12.2023 JP 2023217117
(71) Applicant: Mitsubishi Chemical Corporation, Tokyo 100-8251 (JP)
(72) Inventor: YAMAMOTO, Takatoshi, Tokyo 100-8251 (JP)
(74) Representative: Vossius & Partner Patentanwälte Rechtsanwälte mbB
(86) International application number: PCT/JP2024/039928
(87) International publication number: WO 2025/134593

(57) **Abstract**

Provided is a polyvinyl alcohol-based film containing a polyvinyl alcohol-based resin (A), wherein the absolute value of a difference (|α - β|) between an arithmetic average height (Sa) α of a first surface of the polyvinyl alcohol-based film and an arithmetic average height (Sa) β of a second surface of the polyvinyl alcohol-based film is 0.10 µm or less in order to provide a polyvinyl alcohol-based film capable of suppressing occurrence of winding wrinkles when the film is wound around a core tube.

## Description

### Technical Field

The present disclosure relates to a polyvinyl alcohol-based film containing a polyvinyl alcohol-based resin as a main component, and more particularly to a polyvinyl alcohol-based film capable of suppressing occurrence of winding wrinkles when the film is wound around a core tube.

### Background Art

In the related art, a polyvinyl alcohol-based film has been used in many applications as a film having excellent transparency and dyeability and has been used, for example, as an optical polyvinyl alcohol-based film for a raw film for a polarizing film and the like.

In addition, a polyvinyl alcohol-based film has been used as a water-soluble film featuring water solubility by adjusting the saponification degree of a polyvinyl alcohol-based resin or introducing (modifying) an anionic functional group and the like into a polyvinyl alcohol molecular chain. In particular, there is an advantage in applications to a unit packaging of a chemical agent such as an agricultural chemical or a detergent where it can save time and effort to measure the amount of the chemical agent at the time of use and prevents contaminations of hands, and so applications to a unit packaging of a liquid product such as a liquid detergent have particularly been expanding.

A polyvinyl alcohol-based film is typically wound around a core tube after the film formation to form a film roll for storage and conveyance. Therefore, in terms of storage of a polyvinyl alcohol-based film, which is generally stored in a wound state, for example, Patent Literature 1 proposes a water-soluble film that has been processed so that the surface roughness (Ra) and the maximum height (Rz) of the film are within a predetermined range for the purpose of suppressing blocking which occurs when the film is stored at a high temperature for a long period of time in a warehouse and the like in summer.

### Citation List

### Patent Literature

Patent Literature 1: JP 2021-178514 A

### Summary

### Technical Problem

However, the film of Patent Literature 1 is a film in which the anti-blocking property is enhanced by utilizing the difference in surface roughness between the processed film surface having the surface roughness (Ra) and the maximum height (Rz) of the film within a predetermined range and the unprocessed back surface. Therefore, although the anti-blocking property is excellent, air is not released well when the film is wound around a core tube, and there is a tendency that winding wrinkles are likely to occur. The film roll provided with winding wrinkles causes problems that the flatness of the side end of the roll is impaired to deteriorate the appearance, and the film cannot be smoothly unwound.

Furthermore, when the film is unwound from the film roll provided with winding wrinkles and is used to perform a subsequent secondary processing, the secondary processed product tends to have a poor appearance due to distortion or wrinkles, and thus improvement thereof is required.

The present disclosure has been made in view of such circumstances and provides a polyvinyl alcohol-based film capable of suppressing occurrence of winding wrinkles when the film is wound around a core tube.

### Solution to Problem

Thus, as a result of intensive studies in view of such circumstances, the present inventor has found that when the absolute value of the difference (|α - β|) between the arithmetic average height (Sa) α of a first surface and the arithmetic average height (Sa) β of a second surface is set to 0.10 µm or less for a polyvinyl alcohol-based film stored in a wound state, air release is improved when the film is wound around a core tube, and occurrence of winding wrinkles is suppressed.

That is, the present disclosure provides the following aspects [1] to [13].
[1] A polyvinyl alcohol-based film containing a polyvinyl alcohol-based resin (A), wherein an absolute value of a difference (|α - β|) between an arithmetic average height (Sa) α of a first surface of the polyvinyl alcohol-based film and an arithmetic average height (Sa) β of a second surface of the polyvinyl alcohol-based film is 0.10 µm or less.
[2] The polyvinyl alcohol-based film according to [1], wherein the arithmetic average height (Sa) α of the first surface and the arithmetic average height (Sa) β of the second surface are both 2 µm or less.
[3] The polyvinyl alcohol-based film according to [1] or [2], wherein an absolute value of a difference (|γ - δ|) between a maximum height (Sz) γ of the first surface of the polyvinyl alcohol-based film and a maximum height (Sz) δ of the second surface is 3 µm or less.
[4] The polyvinyl alcohol-based film according to any of [1] to [3], wherein the maximum height (Sz) γ of the first surface and the maximum height (Sz) δ of the second surface are both 2 µm or more.
[5] The polyvinyl alcohol-based film according to any of [1] to [4], wherein the polyvinyl alcohol-based film contains a filler.
[6] The polyvinyl alcohol-based film according to [5], wherein a content of the filler is 1 to 30 parts by mass per 100 parts by mass of the polyvinyl alcohol-based resin (A).
[7] The polyvinyl alcohol-based film according to any of [1] to [6], wherein the polyvinyl alcohol-based film has a water content of 3 to 15 mass%.
[8] The polyvinyl alcohol-based film according to any of [1] to [7], wherein the polyvinyl alcohol-based film is a water-soluble film.
[9] A chemical agent package including a package formed of the polyvinyl alcohol-based film according to any of [1] to [8] and a chemical agent packaged in the package.
[10] The chemical agent package according to [9], wherein the chemical agent is a detergent.
[11] The chemical agent package according to [10], wherein the detergent is a liquid detergent.
[12] A method for producing the polyvinyl alcohol-based film according to any of [1] to [8], the method comprising:
   casting a film-forming raw material containing the polyvinyl alcohol-based resin (A) on a cast surface to produce a polyvinyl alcohol-based film, wherein
   the polyvinyl alcohol-based film has a water content of 40 mass% or less when the film is peeled off from the cast surface after the film-forming raw material is cast on the cast surface.
[13] A method for producing the polyvinyl alcohol-based film according to any of [1] to [8], the method comprising:
   casting a film-forming raw material containing the polyvinyl alcohol-based resin (A) on a cast surface to produce a polyvinyl alcohol-based film, wherein
   a time between casting of the film-forming raw material on the cast surface and peeling of the polyvinyl alcohol-based film from the cast surface is 180 seconds or less.

### Advantageous Effects of Disclosure

According to the polyvinyl alcohol-based film of the present disclosure, occurrence of winding wrinkles can be suppressed when the film is wound around a core tube. Therefore, it is possible to produce a film roll with suppressed occurrence of winding wrinkles and a good appearance with aligned side ends of the roll.

In the present disclosure, a higher improvement effect can be achieved in a polyvinyl alcohol-based film having a relatively high water content.

### Description of Embodiments

Hereinafter, the present disclosure will be described in more detail based on embodiments of the present disclosure, but the present disclosure is not limited to the following embodiments.

In the present disclosure, unless otherwise specified, the expression "Y to Z" (Y and Z are any numerals) includes the meaning of "Y or more and Z or less" as well as the meaning of "preferably more than Y" or "preferably less than Z".

Moreover, the expression of "Y or more" (Y is any numeral) or "Z or less" (Z is any numeral) also includes the meaning of "preferably more than Y" or "preferably less than Z".

In the present specification, for numerical ranges described stepwise, the upper limit value or the lower limit value of a numerical range in a certain step can be optionally combined with the upper limit value or the lower limit value of a numerical range in another step. In addition, for a numerical range described herein, the upper limit value or the lower limit value of the numerical range can be replaced by a value shown in Examples.

Hereinafter, the present disclosure will be described in detail.

The polyvinyl alcohol-based film of the present disclosure is a film containing a polyvinyl alcohol-based resin (A), wherein the absolute value of a difference (|α - β|) between the arithmetic average height (Sa) α of a first surface (e.g., a front surface) of the polyvinyl alcohol-based film and the arithmetic average height (Sa) β of a second surface (e.g., a back surface) of the film is 0.10 µm or less.

Hereinafter, polyvinyl alcohol may be abbreviated as "PVA"; a film containing a polyvinyl alcohol-based resin as a main component may be abbreviated as "PVA-based film"; and a water-soluble film containing a polyvinyl alcohol-based resin as a main component may be abbreviated as "PVA-based water-soluble film".

In addition, the "water-soluble film" in the present disclosure means a film that dissolves in water at about normal temperature (20°C).

The solubility of the film can be evaluated as described below.

Specifically, the water-soluble film is cut into a size of 3 cm x 5 cm, placed in a 1-liter beaker containing water (1 liter), and fixed with a jig, and the mixture is stirred with a stirrer (a rotator length of 3 cm, a rotation speed of 750 rpm) while keeping the water temperature at 20°C. In this case, when dispersion of insoluble fine particles of the water-soluble film having a diameter of 1 mm or more is not visually observed, the film is considered to have dissolved.

### PVA-Based Film

### Arithmetic Average Height (Sa)

It is important that in the present PVA-based film, the absolute value of the difference (|α - β|) between the arithmetic average height (Sa) α of the first surface and the arithmetic average height (Sa) β of the second surface is 0.10 µm or less.

The absolute value of the difference (|α - β|) is preferably 0.085 µm or less, more preferably 0.07 µm or less, even more preferably 0.06 µm or less, particularly preferably 0.05 µm or less. The lower limit of the absolute value of the difference (|α - β|) is preferably 0.0005 µm or more, more preferably 0.0001 µm or more, even more preferably 0.00001 µm or more, and so the closer to 0, the more preferable.

When the absolute value of the difference (|α - β|) is within the above range, portions of the film slide moderately on each other during winding of the film, air is allowed to be released well, and occurrence of winding wrinkles can be suppressed.

In the present PVA-based film, the arithmetic average height (Sa) α of the first surface and the arithmetic average height (Sa) β of the second surface are both preferably 2 µm or less, more preferably 1.5 µm or less, even more preferably 1.2 µm or less, particularly preferably 1 µm or less, especially preferably 0.9 µm or less.

Moreover, the arithmetic average height (Sa) α of the first surface and the arithmetic average height (Sa) β of the second surface are both preferably 0.1 µm or more, more preferably 0.2 µm or more, particularly preferably 0.3 µm or more, especially preferably 0.4 µm or more, further preferably 0.5 µm or more.

When the arithmetic average height (Sa) α of the first surface and the arithmetic average height (Sa) β of the second surface are in the above ranges, air is released better during winding of the film, and occurrence of winding wrinkles tends to be further reduced.

In the present disclosure, the arithmetic average height (Sa) α of the first surface and the arithmetic average height (Sa) β of the second surface of the PVA-based film mean the three-dimensional arithmetic average heights defined in accordance with JIS B0681-2 (2018).

### Maximum Height (Sz)

In the present PVA-based film, the absolute value of the difference (|γ - δ|) between the maximum height (Sz) γ of the first surface and the maximum height (Sz) δ of the second surface is preferably 3 µm or less, more preferably 2.5 µm or less, even more preferably 1.8 µm or less, particularly preferably 1.5 µm, especially preferably 1 µm or less. The lower limit of the absolute value of the difference (|γ - δ|) is preferably 0.01 µm or more, more preferably 0.001 µm or more. Therefore, the physical lower limit is 0, and the smaller the value, the more preferable.

When the absolute value of the difference (|γ - δ|) is too large, the balance of sliding of portions the film becomes poor when the film is wound, and air is released unevenly, whereby winding wrinkles are likely to occur.

In the present PVA-based film, the maximum height (Sz) γ of the first surface and the maximum height (Sz) δ of the second surface are both preferably 2 µm or more. At least one of these is more preferably 2.5 µm or more, particularly preferably 3 µm or more, especially preferably 4 µm or more, further preferably 5 µm or more, still further preferably 5.5 µm or more, even further preferably 6 µm or more.

In addition, the maximum height (Sz) γ of the first surface and the maximum height (Sz) δ of the second surface are both preferably 20 µm or less. At least one of these is more preferably 15 µm or less, even more preferably 10 µm or less, particularly preferably 9 µm or less.

When the maximum height (Sz) γ of the first surface and the maximum height (Sz) δ of the second surface are in the above ranges, blocking of the film tends to be further suppressed.

When the maximum height (Sz) γ of the first surface and the maximum height (Sz) δ of the second surface are too small, the film is likely to undergo blocking. Thus, the peeling position of the film is not stabilized at the time of unwinding from the film roll, and the winding speed and tension become unstable, which causes the edge of the wound film roll to misalign. When the maximum height (Sz) γ and the maximum height (Sz) δ are too large, the balance with suppression of winding wrinkles tends to be reduced.

In the present disclosure, the maximum height (Sz) γ of the first surface and the maximum height (Sz) δ of the second surface of the PVA-based film mean the three-dimensional maximum heights defined in accordance with JIS B0681-2 (2018).

Next, the respective components and the like forming the present PVA-based film will be described.

### PVA-Based Resin (A)

The present PVA-based film is a water-soluble film containing a PVA-based resin (A) as a main component. As used herein, "containing a PVA-based resin (A) as a main component" means that the PVA-based resin (A) is contained in an amount of typically 50 mass% or more, preferably 55 mass% or more, particularly preferably 60 mass% or more, based on the entire PVA-based film. When the content is too low, the solubility in water and the mechanical properties of the film tend to be reduced. The upper limit of the content is typically 99 mass% or less, preferably 95 mass% or less, particularly preferably 90 mass% or less, from the viewpoint of the long-term shape stability when the PVA-based film is formed into a liquid detergent package.

Examples of the PVA-based resin (A) used in the present PVA-based film include unmodified PVA and modified PVA-based resins.

The unmodified PVA and the modified PVA-based resins can be produced by production methods known in the art, and, for example, produced as follows.

The unmodified PVA can be produced by saponifying a vinyl ester-based polymer obtained by polymerizing a vinyl ester-based compound.

Examples of the vinyl ester-based compound include vinyl formate, vinyl acetate, vinyl trifluoroacetate, vinyl propionate, vinyl butyrate, vinyl caprate, vinyl laurate, vinyl versatate, vinyl palmitate, vinyl stearate, and the like. Vinyl acetate is preferably used. The vinyl ester-based compounds can be used alone or in combination of two or more types.

The modified PVA-based resin can be produced by copolymerizing the vinyl ester-based compound and an unsaturated monomer copolymerizable with the vinyl ester-based compound, and then saponifying the resulting copolymer.

Examples of the unsaturated monomer copolymerizable with the vinyl ester-based compound include olefins such as ethylene, propylene, isobutylene, α-octene, α-dodecene, and α-octadecene; hydroxy group-containing α-olefins such as 3-buten-1-ol, 4-penten-1-ol, and 5-hexen-1-ol, and derivatives thereof such as acylated compounds; unsaturated acids such as acrylic acid, methacrylic acid, crotonic acid, maleic acid, maleic anhydride, and itaconic acid, undecylenic acids, salts thereof, and monoesters or dialkyl esters thereof; amides such as diacetone acrylamide, acrylamide, and methacrylamide; olefin sulfonic acids such as ethylenesulfonic acid, allylsulfonic acid, and methallylsulfonic acid, or salts thereof; N-vinylpyrrolidone; and the like. These can be used alone or in combination of two or more types.

In addition to the above, the modified PVA-based resin has, for example, a primary hydroxyl group in its side chain. For example, the number of primary hydroxyl groups in the side chain is typically 1 to 5, preferably 1 to 2, particularly preferably 1. Furthermore, the modified PVA-based resin preferably has a secondary hydroxyl group in addition to the primary hydroxyl group. Examples of the modified PVA-based resin include a PVA-based resin having a hydroxyalkyl group in its side chain, a PVA-based resin having a 1,2-diol structural unit in its side chain, and the like. The PVA-based resin having a 1,2-diol structural unit in its side chain can be produced by, for example, (1) a method in which a copolymer of vinyl acetate and 3,4-diacetoxy-1-butene is saponified; (2) a method in which a copolymer of vinyl acetate and vinyl ethylene carbonate is saponified and decarbonated; (3) a method in which a copolymer of vinyl acetate and 2,2-dialkyl-4-vinyl-1,3-dioxolane is saponified and deketalized; or (4) a method in which a copolymer of vinyl acetate and glycerin monoallyl ether is saponified.

The modified PVA-based resin used in the present PVA-based film is preferably modified with at least one hydrophilic group selected from a carboxy group, a sulfonate group, a phosphate group, a pyrrolidone ring group, and the like, from the viewpoint of solubility. These modifying groups also include salts of these functional groups, such as sodium and potassium salts. Among these, an anionic group-modified PVA-based resin is preferably used. Examples of the type of the anionic group include a carboxy group, a sulfonate group, and a phosphate group. From the viewpoint of temporal stability of solubility, a carboxy group and a sulfonate group are particularly preferred, and a carboxy group is even more preferred.

The carboxy group-modified PVA-based resin can be produced by any method. Examples of the production method include (i) a method in which an unsaturated monomer having a carboxy group and a vinyl ester-based compound are copolymerized, and then the resulting copolymer is saponified; (ii) a method in which a vinyl ester-based compound is polymerized in the presence of an alcohol, aldehyde, or thiol having a carboxy group as a chain transfer agent, and then the resulting polymer is saponified.

Examples of the unsaturated monomer having a carboxy group in the method (i) include monomers such as ethylenically unsaturated dicarboxylic acids (e.g., maleic acid, fumaric acid, and itaconic acid); or ethylenically unsaturated dicarboxylic acid monoesters (e.g., monoalkyl maleate, monoalkyl fumarate, and monoalkyl itaconate); or ethylenically unsaturated dicarboxylic acid diesters (e.g., dialkyl maleate, dialkyl fumarate, and dialkyl itaconate) [provided that such a diester needs to be converted into a carboxy group by hydrolysis during saponification of the copolymer]; or ethylenically unsaturated carboxylic acid anhydrides (e.g., maleic anhydride and itaconic anhydride); or ethylenically unsaturated monocarboxylic acids (e.g., (meth)acrylic acid and crotonic acid); and salts thereof. Among these, it is preferable to use maleic acid, monoalkyl maleate, dialkyl maleate, maleate salt, maleic anhydride, itaconic acid, monoalkyl itaconate, dialkyl itaconate, (meth)acrylic acid, or the like. It is particularly preferable to use maleic acid, monoalkyl maleate, dialkyl maleate, maleate salt, or maleic anhydride. It is even more preferable to use monoalkyl maleate. These can be used alone or in combination of two or more types.

In the method (ii), a compound derived from thiol having a higher chain transfer effect is particularly effective, and examples thereof include compounds represented by General Formulae (1) to (3) described below. 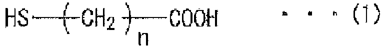 [In General Formula (1), n is an integer of 0 to 5.] 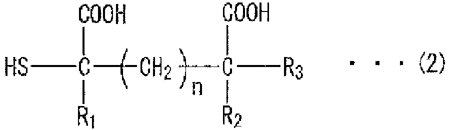 [In General Formula (2), n is an integer of 0 to 5. R₁, R₂, and R₃ each represent a hydrogen atom or a lower alkyl group (which may contain a substituent).] 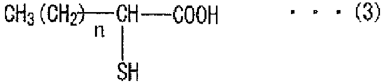 [In General Formula (3), n is an integer of 0 to 20.]

In addition, the thiol-derived compound may also be a salt of any of the compounds represented by General Formulae (1) to (3). Specific examples thereof include mercaptoacetate, 2-mercaptopropionate, 3-mercaptopropionate, and 2-mercaptostearate. These compounds can be used alone or in combination of two or more types.

In addition to the unsaturated monomer having a carboxy group and the vinyl ester-based compound, other general monomers may be incorporated for the polymerization as long as the water solubility is not impaired. Examples of these monomers that can be used include alkyl esters of ethylenically unsaturated carboxylic acids, allyl esters of saturated carboxylic acids, α-olefins, alkyl vinyl ethers, alkyl allyl ethers, as well as (meth)acrylamide, (meth)acrylonitrile, styrene, vinyl chloride, and the like. These can be used alone or in combination of two or more types.

The method for producing the carboxy group-modified PVA-based resin is not limited to the above-described method. For example, there can also be performed a method of post-reacting the PVA-based resin (partially saponified product or completely saponified product) with a carboxy group-containing compound having a functional group that is reactive with a hydroxyl group of such as dicarboxylic acid, aldehyde carboxylic acid, or a hydroxycarboxylic acid.

When a sulfonic acid-modified PVA-based resin modified with a sulfonate group is used, the sulfonic acid-modified PVA-based resin can be produced by, for example, a method of copolymerizing a copolymerization component such as vinylsulfonic acid, styrenesulfonic acid, allylsulfonic acid, methallylsulfonic acid, or 2-acrylamido-2-methylpropanesulfonic acid with the vinyl ester-based compound and then saponifying the resultant copolymer; or a method of introducing vinylsulfonic acid or a salt thereof, 2-acrylamido-2-methylpropanesulfonic acid or a salt thereof, or the like, into the PVA-based resin by Michael addition reaction.

Meanwhile, examples of the method for post-modifying the unmodified PVA include acetoacetic acid esterification, acetalization, urethanization, etherification, grafting, phosphoric acid esterification, or oxyalkylenation of the unmodified PVA.

The present PVA-based film preferably contains a modified PVA-based resin, particularly preferably contains an anionic group-modified PVA-based resin, and even more preferably contains a carboxy group-modified PVA-based resin, in order to improve the solubility of the film in water, particularly the solubility in cold water (e.g., 10°C or lower), and to suppress reduction in solubility over time when a packaged substance is an alkaline substance.

When a carboxy group-modified PVA-based resin is used in the present PVA-based film, a maleic acid-modified PVA-based resin or an itaconic acid-modified PVA-based resin is preferred from the viewpoint of handleability and excellent productivity because of high polymerizability with the vinyl ester-based monomer. In particular, it is preferable to use a maleic acid-modified PVA-based resin from the viewpoint of temporal stability of solubility of the film when a chemical agent is packaged and the viewpoint that the film is less susceptible to the pH of the chemical agent.

The PVA-based resin (A) preferably has an average saponification degree of 80 mol% or more, particularly preferably 82 to 99.9 mol%, even more preferably 85 to 98.5 mol%, especially preferably 90 to 97 mol%. When the average saponification degree is too low, the solubility of the film in water tends to be reduced. When the average saponification degree is too high, the water solubility tends to be reduced. From the viewpoint of balance between solubility and excellent moldability (mold conformability), the average saponification degree is more preferably 90 to 99.9 mol%, particularly preferably 91 to 98.5 mol%, even more preferably 92 to 97 mol%.

The average saponification degree of the PVA-based resin (A) means that the average saponification degree of the entire PVA-based resin contained in the PVA-based film is within the above range. When the PVA-based film contains a plurality of PVA-based resins, the average saponification degree of the entire PVA-based resin (A) is determined by the formula described below using the proportion of each PVA-based resin contained in the entire PVA-based resin (A) and the average saponification degree. 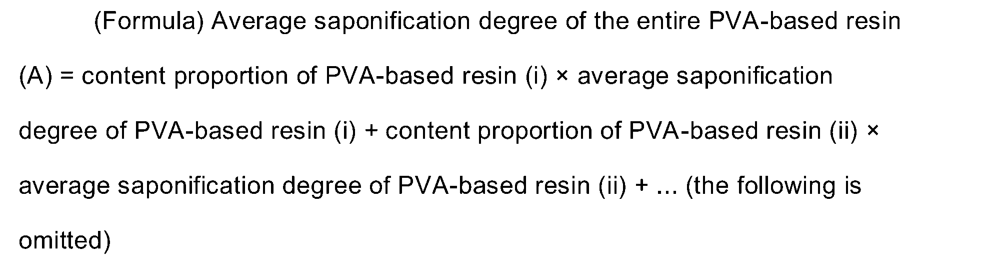 Average saponification degree of the entire PVA-based resin (A) = content proportion of PVA-based resin (i) × average saponification degree of PVA-based resin (i) + content proportion of PVA-based resin (ii) × average saponification degree of PVA-based resin (ii) + ... (the following is omitted) (Formula)

In particular, when the unmodified PVA is used as the PVA-based resin (A), the average saponification degree thereof is preferably 80 mol% or more, particularly preferably 82 to 99 mol%, even more preferably 85 to 90 mol%. When the average saponification degree is too low, the water solubility, particularly the temporal solubility of the film, tends to be reduced when a chemical agent or the like is packaged. When the average saponification degree is too high, the solubility in water also tends to be reduced.

Meanwhile, when the modified PVA-based resin is used as the PVA-based resin (A), the average saponification degree thereof is preferably 80 mol% or more, particularly preferably 85 to 99.9 mol%, even more preferably 90 to 98 mol%. When the average saponification degree is too low, the solubility of the film, particularly the temporal solubility of the film, tends to be reduced when a chemical agent or the like is packaged. When the average saponification degree is too high, the solubility in water also tends to be reduced.

Furthermore, when the anionic group-modified PVA-based resin is used as the PVA-based resin (A), the average saponification degree thereof is preferably 85 mol% or more, particularly preferably 88 to 99 mol%, more preferably 90 to 98 mol%, especially preferably 92 to 97 mol%. When the saponification degree is within this range, reduction of the temporal solubility of the film is suppressed, and the moldability is more excellent. When the average saponification degree is too low, the solubility of the PVA-based film in water tends to be reduced over time, depending on the pH of the chemical agent to be packaged. When the average saponification degree is too high, the solubility in water tends to be reduced.

The average saponification degree is measured in accordance with JIS K 6726 3.5.

The polymerization degree of the PVA-based resin (A) used in the present PVA-based film can be generally expressed by an aqueous solution viscosity. The PVA-based resin (A) preferably has a 4 mass% aqueous solution viscosity at 20°C of 5 to 55 mPa·s, more preferably 10 to 50 mPa·s, particularly preferably 15 to 45 mPa·s, especially preferably 17 to 43 mPa·s, particularly preferably 21 to 40 mPa·s, and even more preferably 21.5 to 38 mPa·s.

The 4 mass% aqueous solution viscosity of the PVA-based resin (A) at 20°C means that the 4 mass% aqueous solution viscosity of the entire PVA-based resin contained in the PVA-based film at 20°C is within the above range.

When the unmodified PVA is used as the PVA-based resin (A), the unmodified PVA preferably has a 4 mass% aqueous solution viscosity at 20°C of 5 to 60 mPa·s, more preferably 10 to 50 mPa·s, particularly preferably 15 to 45 mPa·s.

When the modified PVA-based resin is used as the PVA-based resin (A), the modified PVA-based resin preferably has a 4 mass% aqueous solution viscosity at 20°C of 5 to 50 mPa·s, more preferably 15 to 45 mPa·s, particularly preferably 17 to 40 mPa·s, especially preferably 21 to 38 mPa·s, even more preferably 21.5 to 35 mPa·s.

When the viscosity is within this range, the PVA-based film has excellent mechanical strength and excellent moldability. When the viscosity is too low, the mechanical strength of the PVA-based film as a packaging material tends to be reduced, whereas when the viscosity is too high, the productivity tends to be reduced.

The 4 mass% aqueous solution viscosity is measured in accordance with JIS K 6726 3.11.2.

The modification degree of the modified PVA-based resin is preferably 1 to 15 mol%, particularly preferably 1.5 to 12 mol%, even more preferably 2 to 8 mol%, especially preferably 2 to 5 mol%. When the modification degree is too low, the solubility in water tends to be reduced. When the modification degree is too high, the productivity of the PVA-based resin tends to be reduced, or the biodegradability tends to be reduced, and blocking is more likely to occur.

In the present PVA-based film, the PVA-based resin (A) may be used alone, or two or more types thereof that are different in at least one of the saponification degree, viscosity, modifying group, modification degree, or the like can be used in combination. For example, two or more types of the unmodified PVAs may be used in combination; two or more types of the modified PVA-based resins may be used in combination; or one or more types of the unmodified PVAs and one or more types of the modified PVA-based resins may be used in combination.

Among these, the PVA-based resin (A) preferably contains the modified PVA-based resin from the viewpoint of solubility. From the viewpoint of water sealability and compression strength of the package formed of the film, it is preferable to use one or more types of the unmodified PVAs and one or more types of the modified PVA-based resins in combination.

### Plasticizer (B)

The present PVA-based film preferably contains a plasticizer (B) from the viewpoint of imparting appropriate flexibility to the film when the film is formed into a package. One type of the plasticizer (B) may be used alone, or two or more types thereof may be used in combination.

Examples of the plasticizer (B) typically include glycerins such as glycerin, diglycerin, and triglycerin; alkylene glycols such as triethylene glycol, polyethylene glycol, polypropylene glycol, dipropylene glycol, and propylene glycol; and sugar alcohols such as trimethylolpropane, sorbitol, xylitol, and maltitol. Among these, glycerin, polyethylene glycol, and diglycerin are preferably used as they are easily available and can provide a plasticizing effect with a small amount. In addition, sorbitol is also preferably used from the viewpoint of the temporal stability of the package.

In the present PVA-based film, it is preferable to use a polyhydric alcohol (b1) (hereinafter may be abbreviated as "plasticizer (b1)") having a melting point of 50°C or lower from the viewpoint of conformability of the film to a mold during film formation and mechanical properties.

Examples of the plasticizer (b1) include aliphatic alcohols, preferably divalent alcohols such as ethylene glycol (-13°C), diethylene glycol (-11°C), triethylene glycol (-7°C), propylene glycol (-59°C), tetraethylene glycol (-5.6°C), 1,3-propanediol (-27°C), 1,4-butanediol (20°C), 1,6-hexanediol (40°C), tripropylene glycol, and polyethylene glycol having a molecular weight of 2000 or less; and trivalent or higher-valent alcohols such as glycerin (18°C), diglycerin, and triethanolamine (21°C). These can be used alone or in combination of two or more types. The numerals in parentheses each denote a melting point.

Among the above, those having a melting point of 30°C or lower are particularly preferred, and those having a melting point of 20°C or lower are even more preferred, from the viewpoint of flexibility of the PVA-based film. The lower limit of the melting point is typically -80°C, preferably -10°C, particularly preferably 0°C.

Furthermore, among the plasticizers (b1), those having four or less hydroxyl groups in one molecule are preferred, and those having three or less hydroxyl groups in one molecule are particularly preferred, from the viewpoint of easy control of flexibility near normal temperature (25°C). Specifically, for example, glycerin and the like are preferred.

The plasticizer (b1) preferably has a molecular weight of 100 or less, particularly preferably 50 to 100, even more preferably 60 to 95, from the viewpoint of easy control of flexibility. Specifically, for example, glycerin and the like are preferred.

When two or more types of plasticizers (B) are used in combination in the present PVA-based film, it is preferable to use a polyhydric alcohol (b2) (hereinafter may be abbreviated as "plasticizer (b2)") having a melting point of 80°C or higher from the viewpoint of toughness of the PVA-based film, the temporal shape stability of the formed package, and the like.

Many of sugar alcohols, monosaccharides, and polysaccharides can be used as the plasticizer (b2). Among these, examples include divalent alcohols such as salicyl alcohol (83°C), catechol (105°C), resorcinol (110°C), hydroquinone (172°C), bisphenol A (158°C), bisphenol F (162°C), and neopentyl glycol (127°C); trivalent alcohols such as phloroglucinol (218°C); tetravalent alcohols such as erythritol (121°C), threitol (88°C), and pentaerythritol (260°C); pentavalent alcohols such as xylitol (92°C), arabitol (103°C), fucitol (153°C), glucose (146°C), and fructose (104°C); hexavalent alcohols such as mannitol (166°C), sorbitol (95°C), and inositol (225°C); octavalent alcohols such as lactitol (146°C), sucrose (186°C), and trehalose (97°C); and alcohols having nine or more valences such as maltitol (145°C). These can be used alone or in combination of two or more types. The numerals in parentheses each denote a melting point.

Among the above, those having a melting point of 85°C or higher are preferred, and those having a melting point of 90°C or higher are particularly preferred, from the viewpoint of tensile strength of the PVA-based film. The upper limit of the melting point is preferably 300°C, particularly preferably 200°C.

Furthermore, among the plasticizers (b2), those having four or more hydroxyl groups in one molecule are preferred from the viewpoint of compatibility with the PVA-based resin (A); those having 5 to 10 hydroxyl groups in one molecule are particularly preferred; and those having 6 to 8 hydroxyl groups in one molecule are even more preferred. Specifically, for example, sorbitol, sucrose, trehalose, and the like are preferred.

The plasticizer (b2) preferably has a molecular weight of 150 or more, particularly preferably 160 to 500, even more preferably 180 to 400, from the viewpoint of toughness of the PVA-based film. Specifically, for example, sorbitol, sucrose, and the like are preferred.

The content of the plasticizer (B) used in the present PVA-based film is preferably 3 to 25 parts by mass, more preferably 5 to 22 parts by mass, particularly preferably 7 to 20 parts by mass, even more preferably 8 to 18 parts by mass, and especially preferably 8.5 to 16 parts by mass, per 100 parts by mass of the PVA-based resin (A).

When the content of the plasticizer (B) is too low, the mechanical properties tend to be insufficient, so that the film becomes too hard or brittle under a low humidity environment; or the conformability of the film during film formation tends to be reduced resulting in poor appearance of the package; or the tension of the formed package tends to be reduced over time. On the contrary, when the content of the plasticizer (B) is too high, the film tends to be excessively soft, so that blocking easily occurs or the dimension stability of the package is reduced.

The content of the plasticizer (b1) is preferably 3 to 25 parts by mass, particularly preferably 5 to 20 parts by mass, even more preferably 7 to 18 parts by mass, and especially preferably 8 to 16 parts by mass, per 100 parts by mass of the PVA-based resin (A).

When the content of the plasticizer (b1) is too low, the mechanical properties tend to be reduced or the conformability of the film during film formation tends to be reduced, resulting in poor appearance of the package.

The content of the plasticizer (b1) in the entire plasticizer (B) is preferably more than 50 mass%, particularly preferably 70 mass% or more, even more preferably 80 mass% or more, especially preferably 85 mass% or more, even more preferably 90 mass% or more, or 97 mass% or more.

When the content of the plasticizer (b1) is too low, the mechanical properties tend to be reduced or the conformability of the film during film formation tends to be reduced, resulting in poor appearance of the package.

When the plasticizer (b2) is used, the content thereof is preferably 1 to 25 parts by mass, particularly preferably 1 to 20 parts by mass, even more preferably 1.5 to 10 parts by mass, especially preferably 2 to 8 parts by mass, per 100 parts by mass of the PVA-based resin (A).

When the content of the plasticizer (b2) is too low, the tension of the film tends to be reduced when the film is formed into a package. When the content is too high, the mechanical properties of the film and the conformability during film formation tend to be reduced, resulting in poor appearance of the package.

### Filler (C)

The present PVA-based film may further contain a filler (C) as necessary.

The filler (C) is contained for the purpose of the anti-blocking property. Examples thereof include an organic filler and an inorganic filler, and among these, an organic filler is preferably used. These can be used alone or in combination of two or more types.

The filler (C) has an average particle size of preferably 0.1 to 50 µm, particularly preferably 1 to 35 µm. The average particle size of the filler (C) is measured by a laser diffraction particle size distribution analyzer and calculated from a D50 value of the obtained cumulative volume distribution (particle size of cumulative 50% of particles).

The organic filler used in the present PVA-based film refers to a particulate substance (primary particles) formed of an organic compound and having any form such as a needle, rod, lamellar, scale, or spherical form; or an agglomerate (secondary particles) of the particulate substance.

The organic filler is mainly selected from polymer compounds. Examples thereof include a melamine-based resin, a polymethyl (meth)acrylate-based resin, a polystyrene-based resin, and biodegradable resins such as starch and polylactic acid. These can be used alone or in combination of two or more types. Among these, a polymethyl (meth)acrylate-based resin, a polystyrene-based resin, and biodegradable resins such as starch are preferred. In particular, starch is preferred from the viewpoint of dispersibility in the PVA-based resin (A) or the like.

Examples of the starch include raw starches (such as corn starch, potato starch, sweet potato starch, wheat starch, cassava starch, sago starch, tapioca starch, sorghum starch, rice starch, bean starch, kudzu starch, bracken starch, lotus starch, and water chestnut starch); physically modified starches (such as α-starch, fractionated amylose, and moist heat-treated starch); enzymatically modified starches (such as hydrolyzed dextrin, enzymatically decomposed dextrin, and amylose); chemically degraded starches (such as acid-treated starch, hypochlorite oxidized starch, and dialdehyde starch); and chemically modified starch derivatives (such as esterified starch, etherified starch, cationized starch, and crosslinked starch). These can be used alone or in combination of two or more types. Among these, raw starches, particularly corn starch and rice starch are preferably used from the viewpoint of ease of availability and cost efficiency.

The organic filler preferably has an average particle size of 2 to 50 µm, particularly preferably 4 to 45 µm, even more preferably 10 to 40 µm, especially preferably 15 to 35 µm.

When the average particle size is too small, the film is more susceptible to blocking. When the average particle size is too large, the particles of the filler are likely to aggregate with each other resulting in poor dispersibility, or the film tends to suffer pinholes when stretched during film processing.

The inorganic filler used in the present PVA-based film refers to a particulate substance (primary particles) formed of an inorganic compound and having any form such as a needle, rod, lamellar, scale, or spherical form; or an agglomerate (secondary particles) of the particulate substance.

Examples of the inorganic filler include oxide-based inorganic compounds such as silica (silicon dioxide), diatomite, titanium oxide, calcium oxide, magnesium oxide, aluminum oxide, barium oxide, germanium oxide, tin oxide, and zinc oxide; talc, clay, kaolin, mica, asbestos, gypsum, graphite, glass balloons, glass beads, calcium sulfate, barium sulfate, ammonium sulfate, calcium sulfite, calcium carbonate, whiskered calcium carbonate, magnesium carbonate, dawsonite, dolomite, potassium titanate, carbon black, glass fibers, alumina fibers, boron fibers, processed mineral fibers, carbon fibers, hollow carbon spheres, bentonite, montmorillonite, copper powder, sodium sulfate, potassium sulfate, zinc sulfate, copper sulfate, iron sulfate, magnesium sulfate, aluminum sulfate, aluminum potassium sulfate, ammonium nitrate, sodium nitrate, potassium nitrate, aluminum nitrate, ammonium chloride, sodium chloride, potassium chloride, magnesium chloride, calcium chloride, sodium phosphate, and potassium chromate. These can be used alone or in combination of two or more types.

Among the above, it is preferable to use oxide-based inorganic compounds and talc; it is even more preferable to use titanium oxide, talc, and silica; and it is particularly preferable to use silica.

The inorganic filler preferably has an average particle size of 1 to 20 µm, particularly preferably 2 to 15 µm, even more preferably 3 to 10 µm. When the average particle size is too small, the film is more susceptible to blocking, and the flexibility and toughness of the film tend to be reduced. When the average particle size is too large, water sealability tends to be reduced.

The content of the filler (C) is preferably 1 to 30 parts by mass, particularly preferably 2 to 25 parts by mass, even more preferably 2.5 to 20 parts by mass, per 100 parts by mass of the PVA-based resin (A). When the content proportion is too low, the film is more susceptible to blocking. When the content proportion is too high, the flexibility and toughness of the film tend to be reduced.

From the viewpoint of the compatibility between the anti-blocking properties of the film and improved winding wrinkles, and the balance between the anti-blocking properties and moldability of the film, the content of the filler (C) is preferably 8 parts by mass or less, particularly preferably 6 parts by mass or less, even more preferably 0.1 to 5.5 parts by mass, more preferably 0.5 to 5.0 parts by mass, even more preferably 1 to 4.5 parts by mass, and particularly preferably 1.5 to 4.0 parts by mass, especially preferably 2 to 3.5 parts by mass, per 100 parts by mass of the PVA-based resin (A).

### Surfactant (D)

The present PVA-based film may contain a surfactant (D) as necessary.

The surfactant (D) is contained for the purpose of improving the peelability from a cast surface during production of the present PVA-based film. Examples of the surfactant include a nonionic surfactant, a cationic surfactant, and an anionic surfactant. Examples thereof include polyoxyethylene nonylphenyl ether, polyoxyethylene octylnonyl ether, polyoxyethylene dodecylphenyl ether, polyoxyethylene alkylallyl ether, polyoxyethylene sorbitan monolaurate, polyoxyethylene sorbitan monopalmitate, polyoxyethylene sorbitan monostearate, polyoxyethylene sorbitan monooleate, polyoxyalkylene alkyl ether phosphate ester monoethanolamine salt, and polyoxyethylene alkylamino ethers such as polyoxyethylene laurylamino ether and polyoxyethylene stearylamino ether. One type of these is used, or two or more types thereof are used in combination. Among these, polyoxyalkylene alkyl ether phosphate ester monoethanolamine salt and polyoxyethylene laurylamino ether are preferred from the viewpoint of production stability.

The content of the surfactant (D) is preferably 0.1 to 5 parts by mass, particularly preferably 0.2 to 4.5 parts by mass, even more preferably 0.3 to 4 parts by mass, per 100 parts by mass of the PVA-based resin (A). When the content is too low, the peelability between the cast surface of the film forming apparatus and the formed PVA-based film tends to be reduced, resulting in lower productivity. When the content is too high, the adhesive strength tends to be reduced during sealing.

The present PVA-based film may contain an antioxidant from the viewpoint of suppressing yellowing. Examples of the antioxidant include sulfites such as sodium sulfite, potassium sulfite, calcium sulfite, and ammonium sulfite; tartaric acid, ascorbic acid, sodium thiosulfate, catechol, and Rongalit. These can be used alone or in combination of two or more types. Among these, sulfites, particularly sodium sulfite is preferred. The amount of the antioxidant to be blended is preferably 0.1 to 10 parts by mass, even more preferably 0.2 to 5 parts by mass, particularly preferably 0.3 to 3 parts by mass, per 100 parts by mass of the PVA-based resin (A).

The PVA-based film may further contain a perfume, an antirust agent, a fungicide, a colorant, a bulking agent, an antifoaming agent, an ultraviolet absorber, a fluorescent brightener, liquid paraffins, and a bitterness component (e.g., denatonium benzoate), as long as the purpose of the present disclosure is not impaired. These can be used alone or in combination of two or more types.

### Production of PVA-Based Film

The present PVA-based film is produced through a dissolution step of blending the PVA-based resin (A), preferably also the plasticizer (B), and the filler (C) and the surfactant (D) as necessary, and the like, and dissolving or dispersing the mixture in water to prepare a film-forming raw material; and a film forming step of shaping the film-forming raw material into a film shape, followed by a drying treatment as necessary to form a film. The produced film is wound to form a film roll.

The steps performed for producing the present PVA-based film will be described below.

### Dissolution Step

In a dissolution step, the PVA-based resin composition containing the respective components blended as described above is dissolved or dispersed in water to prepare an aqueous solution or an aqueous dispersion serving as a film-forming raw material.

Typically, normal-temperature dissolution, high-temperature dissolution, dissolution under pressure, or the like is employed as a dissolution method for dissolving the PVA-based resin composition in water. Among these, high-temperature dissolution is preferred from the viewpoint of less undissolved matter and excellent productivity.

The film-forming raw material preferably has a solid content concentration of 10 to 65 mass%, particularly preferably 12 to 60 mass%, even more preferably 15 to 55 mass%. When the concentration is too low, the productivity of the film tends to be reduced. When the concentration is too high, the viscosity tends to become too high, which requires a longer time to defoam the film-forming raw material or causes die line to occur during film formation.

### Film Forming Step

In a film forming step, the film-forming raw material prepared in the dissolution step is shaped into a film shape and dried, if necessary, to form a film.

For the film formation, any method such as a melt extrusion method or a casting method can be employed. From the viewpoint of accuracy in film thickness, the casting method is preferred.

When the casting method is performed, the film-forming raw material is ejected from a slit such as a T-shaped slit die and cast onto a cast surface, such as a metal surface of an endless belt or a drum roll, a polyethylene terephthalate film, or a plastic substrate such as polypropylene. The cast material can then be dried to produce the present PVA-based film. An endless belt or a drum roll is preferably used as an object to which the film-forming raw material is cast. Among these, a drum roll is more preferably used from the viewpoint of easy control of the water content of the film when the film is peeled off from the cast surface.

The present PVA-based film satisfies a specific range of the absolute value of the difference (|α - β|) between the arithmetic average height (Sa) α of a first surface and the arithmetic average height (Sa) β of a second surface. The arithmetic average height can be adjusted to fall within the specific range by, for example, controlling the water content of the film at the time of peeling from the cast surface, the time of contact with the cast surface (contact time), the temperature of the cast surface (casting temperature), and the like.

In the film forming step of the present PVA-based film, the water content of the film at the time of peeling from the cast surface is preferably set to be higher than that in the method in the related art.

By further drying the film of which the inside has not been dried to the target water content without being in contact with the cast surface, the solid matter such as the filler contained in the film flows inside and is dispersed on both surfaces of the film in a well-balanced manner, and a film having a small difference in roughness between both surfaces of the film can be prepared.

Therefore, when the PVA-based film is peeled off from the cast surface, the PVA-based film preferably has a water content of 40 mass% or less, more preferably 30 mass% or less, even more preferably 25 mass% or less. When the PVA-based film is peeled off from the cast surface, the PVA-based film preferably has a water content of 5 mass% or more, particularly preferably 8 mass% or more, even more preferably 12 mass% or more.

That is, when the PVA-based film is peeled off from the cast surface, the PVA-based film preferably has a water content of 5 to 40 mass%, more preferably 8 to 30 mass%, even more preferably 12 to 25 mass%.

By setting the water content of the PVA-based film when the PVA-based film is peeled off from the cast surface to the above range, the filler and the like can also be distributed on the surface of the cast surface, thereby reducing the difference in roughness between both film surfaces.

The water content is measured in accordance with JIS K 6726 3.4, and the resulting volatile content based on the standard is defined as the water content.

The contact time of the film with the cast surface after casting the film-forming raw material on the cast surface until peeling is preferably 180 seconds or less, more preferably 120 seconds or less, even more preferably 90 seconds or less, from the viewpoint of adjusting the water content of the film at the time of peeling from the cast surface. The contact time of the film with the cast surface is preferably 10 seconds or more, particularly preferably 20 seconds or more.

That is, the contact time of the film with the cast surface after casting the film-forming raw material on the cast surface until peeling is preferably 10 to 180 seconds, more preferably 20 to 120 seconds, and even more preferably 20 to 90 seconds.

By setting the contact time of the film with the cast surface within the above range, the difference in roughness between both film surfaces tends to be reduced.

The casting temperature is preferably 60°C to 100°C, more preferably 65°C to 95°C, even more preferably 70°C to 90°C, from the viewpoint of adjusting the water content of the film at the time of peeling the film from the cast surface. When the casting temperature is within such a range, the filler and the like can also be distributed on the surface of the cast surface, the difference in roughness between both film surfaces tends to be small, and winding wrinkles and blocking can be suppressed.

When the film is peeled off from the cast surface and then further dried, it is preferable to use a drying roll (an apparatus for drying the film by passing the film between a plurality of metal rolls set to a predetermined temperature) from the viewpoint of easily adjusting the roughness of both film surfaces to a specific range.

In the related art, when a film is produced by a casting method, the film is dried on a cast surface until the water content of the film becomes relatively low in order to adjust the roughness of the film surface by setting the surface of the cast surface to a predetermined roughness, or to reduce time and effort required for drying treatment and the drying time after the film is peeled off from the cast surface and before the film is wound.

Therefore, the drying has proceeded to the inside of the film when the film is peeled off from the cast surface. Thus, the filler and the like are fixed without flowing inside the film, and the roughness of the film surface in contact with the cast surface tends to depend on the roughness of the cast surface. Meanwhile, the film surface not in contact with the cast surface (the surface exposed to air) is dispersed with the filler and the like in the drying process on the cast surface and has irregularities derived therefrom. Therefore, there is a tendency that a film having a large difference in roughness between both film surfaces is produced.

Thus, the present PVA-based film can be produced.

The present PVA-based film preferably has a water content of 3 to 15 mass%, particularly preferably 5 to 12 mass%, even more preferably 6 to 10 mass%, from the viewpoint of mechanical strength and sealability. When the water content is too low, the film tends to be too hard, resulting in, for example, reduction in moldability when a package is formed in secondary processing or reduction in impact resistance of the package or poor sealing. When the water content is too high, blocking and winding wrinkles tend to occur. The water content can be adjusted by appropriately setting the film forming conditions, the drying conditions, and the humidity control conditions.

The water content is measured in accordance with JIS K 6726 3.4, and the resulting volatile content is defined as the water content.

The thickness of the present PVA-based film is appropriately selected according to applications and the like, and the thickness thereof is preferably 10 to 130 µm, particularly preferably 20 to 110 µm, even more preferably 30 to 100 µm, especially preferably 45 to 90 µm. When the thickness is too small, the mechanical strength of the film tends to be reduced. When the thickness is too large, the speed of dissolution in water tends to be reduced and the film forming efficiency also tends to be reduced.

The width of the present PVA-based film is appropriately selected according to applications and the like, and the width thereof is preferably 300 to 5000 mm, particularly preferably 500 to 4000 mm, even more preferably 600 to 3000 mm. When the width is too small, the production efficiency tends to be reduced. When the width is too large, controlling slackness and film thickness tends to become difficult.

The length of the present PVA-based film is appropriately selected according to applications and the like, and the length thereof is preferably 100 to 20000 m, particularly preferably 800 to 15000 m, even more preferably 1000 to 10000 m. When the length is too small, film switching tends to require time and effort. When the length is too large, tight winding tends to result in poor appearance and heavy mass.

The present PVA-based film is conveyed and is usually wound around a core tube to form a film roll. In this case, since the difference in arithmetic average height (Sa) between the surfaces of the wound film and the film overlapping thereon in contact with each other is always controlled to a constant small value, the sliding between the already wound film and the film to be wound becomes moderate, and thus air is released between the both films moderately, thereby making it possible to form a film roll without winding wrinkles and also to suppress blocking at the time of unwinding.

Therefore, the present PVA-based film can form a film roll having excellent appearance.

The formed film roll can be supplied as a product as it is, but it can preferably be also supplied as a film roll slit into a film width having a desired size.

The present PVA-based film thus produced is useful for various packaging applications, such as unit packaging applications of chemical agents such as agrochemicals and detergents; (hydraulic) transfer films; sanitary products such as sanitary pads and disposable diapers; waste disposal products such as ostomy bags; medical products such as blood absorbent sheets; and temporary base materials such as germination sheets, seed tapes, and embroidery base fabrics. In particular, the present PVA-based film can be suitably used for unit packaging applications of chemical agents such as laundry detergents and dishwashing detergents.

### Chemical Agent Package

A chemical agent package according to one embodiment of the present disclosure is produced by covering a chemical agent with a package made of the present PVA-based film produced. In the chemical agent package, the chemical agent is packaged in the package formed of the present PVA-based film having water solubility. Thus, when the chemical agent is put into water together with the package, the package (the present PVA-based film) on the surface dissolves to expose the chemical agent, and the chemical agent can be dissolved or dispersed in water to exhibit its effect. Therefore, the chemical agent package according to one embodiment of the present disclosure is preferred as a chemical agent package containing a relatively small amount of the chemical agent such as one dose.

Examples of the chemical agent include agricultural chemicals such as insecticides, fungicides, and herbicides; fertilizers; and detergents. In particular, detergents such as laundry detergents and dishwashing detergents are preferred. Such a chemical agent may be in the form of liquid or solid, and examples of the solid form include granules, tablets, and powders. The chemical agent is preferably a chemical agent that is used by dissolving or dispersing in water, and it is particularly preferable to enclose a liquid detergent. The pH of such a chemical agent may be any of alkaline, neutral, or acidic.

The liquid detergent has a pH value when dissolved or dispersed in water of preferably 6 to 12, particularly preferably 6.5 to 11, even more preferably 7 to 8. The liquid detergent preferably has a water content of 15 mass% or less, particularly preferably 0.1 to 10 mass%, even more preferably 0.1 to 7 mass%. When the water content of the liquid detergent is within the above range, the present PVA-based film tends to be free from gelation or insolubilization and has excellent water solubility.

The pH value is measured in accordance with JIS K 3362 8.3. The water content is measured in accordance with JIS K 3362 7.21.3.

Such a chemical agent package can be produced by a known method.

For example, the chemical agent package can be produced by disposing a chemical agent between the two present PVA-based films (the first present PVA-based film and the second present PVA-based film) facing each other, and pressure-bonding the overlapping portions (contact portions) of the present PVA films around the chemical agent.

Specifically, a concave part having a shape in which a chemical agent can be placed is prepared as a lower mold of a molding apparatus, and the first PVA-based film (bottom film) is fixed to the lower mold to mold the bottom film into a shape along the lower mold.

Meanwhile, the second present PVA-based film (top film) is fixed to the upper mold of the molding apparatus. Subsequently, a separately prepared chemical agent such as a liquid detergent is placed (injected) into the molded bottom film, and then the upper mold and the lower mold are compressed to bring the top film and the bottom film around the chemical agent into contact with each other, and the contact portion is pressure-bonded under vacuum. After pressure-bonding, the vacuum is released, and a chemical agent package with the chemical agent enclosed in the present PVA-based film can be produced.

Examples of the method of pressure-bonding the film include a heat-sealing method, a water-sealing method, and a glue-sealing method. Among these, a water-sealing method is preferably used from the viewpoint of easy control of pressure-bonding conditions and the like.

### Examples

Hereinafter, the present disclosure will be described more specifically with reference to Examples, but the present disclosure is not limited to the following Examples as long as they do not go beyond the scope of the present disclosure. In the Examples, terms "parts" and "%" are based on mass.

Firstly, the following materials were provided as raw materials of the PVA-based films of Examples and Comparative Examples. Subsequently, the PVA-based films of Examples and Comparative Examples described below were produced using these raw materials. The arithmetic average height (Sa) and the maximum height (Sz) of each of the films were measured, and winding wrinkles and blocking in a film roll formed using the film were evaluated as described below. The evaluation results thereof are shown in Table 1 below.

### Raw Materials of PVA-Based Film

The following two types were used as a PVA-based resin (A).
- (a1): A carboxy group-modified PVA-based resin having a 4% aqueous solution viscosity of 22 mPa·s at 20°C, an average saponification degree of 94 mol%, and a modification degree with monomethyl maleate of 2.0 mol%
- (a2): An unmodified PVA having a 4% aqueous solution viscosity of 43 mPa·s at 20°C, and an average saponification degree of 88 mol%

The following two types were used as a plasticizer (B).
- (b1): Glycerin
- (b2): Sorbitol

Corn starch (average particle size of 20 µm) was used as a filler (C).

### Example 1

A film-forming raw material as an aqueous dispersion of a resin composition having a solid content concentration of 25% was prepared by mixing 90 parts of the PVA-based resin (a1) and 10 parts of the PVA-based resin (a2) as the PVA-based resins (A), 20 parts of the plasticizer (b1) and 20 parts of the plasticizer (b2) as the plasticizer (B), 8 parts of the filler (C), and water; and subjecting the mixture to a dissolution treatment.

The prepared film-forming raw material was cast on a metal cast surface and was held on the cast surface for 70 seconds at a casting temperature of 85°C, and then the film was peeled off from the cast surface (the water content of the film at the time of peeling was 15 to 20%) and was further dried to produce a water-soluble PVA-based film having a thickness of 87 µm and a water content of 9%.

### Examples 2 to 6, Comparative Examples 1 and 2

A water-soluble PVA-based film was produced in the same manner as in Example 1, except that the composition of the film, the contact time with the cast surface, and the casting temperature were changed as shown in Table 1.

### Arithmetic Average Height (Sa) and Maximum Height (Sz)

The arithmetic average height (Sa) and the maximum height (Sz) of each of the PVA-based films produced in Examples 1 to 6 and Comparative Examples 1 and 2 were measured at any three points on each of the first surface and the second surface of the PVA-based film using a shape analysis laser microscope VK-X-1000 (available from Keyence Corporation) in accordance with JIS B 0681, and the average thereof was calculated and taken as each value.

In addition, a film roll was produced using each of the PVA-based films produced in Examples 1 to 6 and Comparative Examples 1 and 2 and evaluated according to the following methods.

### Winding Wrinkles

The produced PVA-based film was slit at a width of 0.5 m and wound around a core tube having an inside diameter of 3 inches for 500 m to prepare a film roll, and the winding state of the PVA-based film was visually observed and evaluated based on the following criteria.

### • Evaluation criteria

o (Very good): No wrinkles were generated during winding.
Δ (Good): Wrinkles were slightly generated during winding.
× (Poor): Many wrinkles were generated during winding.

### Blocking

The appearance of the film roll produced above was visually observed and evaluated based on the following criteria.
• Evaluation criteria
o (Very good): The film roll edges were aligned.
Δ (Good): There was an area where the film roll edges were slightly misaligned.
× (Poor): The film roll edges were greatly misaligned.

| | PVA-based film | | | | | | | | | | | | Film roll | |
|---|---|---|---|---|---|---|---|---|---|---|---|---|---|---|
| | Composition (parts) | | | Contact time (seconds) | Casting temperature (°C) | Water content at peeling (%) | Arithmetic average height Sa (µm) | | | Maximum height Sz (µm) | | | Evaluation | |
| | PVA-based resin (A) | Plasticizer (B) | Filler (C) | | | | First surface α | Second surface β | Sa difference \|α - β\| | First surface γ | Second surface δ | Sz difference \|γ - δ\| | Winding wrinkles | Blocking |
| Example 1 | (a1) 90 | (b1) 20 | 8 | 70 | 85 | 15 to 20 | 0.56 | 0.61 | 0.05 | 7.62 | 6.37 | 1.25 | ○ | ○ |
| | (a2) 10 | (b2) 20 | | | | | | | | | | | | |
| Example 2 | (a1) 85 | (b1) 20 | 8 | 70 | 85 | 15 to 20 | 0.54 | 0.59 | 0.05 | 7.24 | 5.77 | 1.47 | ○ | ○ |
| | (a2) 15 | (b2) 20 | | | | | | | | | | | | |
| Example 3 | (a1) 85 | (b1) 20 | 8 | 50 | 85 | 15 to 20 | 0.51 | 0.57 | 0.06 | 5.46 | 5.29 | 0.17 | ○ | ○ |
| | (a2) 15 | (b2) 20 | | | | | | | | | | | | |
| Example 4 | (a1) 85 | (b1) 15 | 8 | 70 | 85 | 15 to 20 | 0.72 | 0.71 | 0.01 | 8.46 | 7.63 | 0.83 | ○ | ○ |
| | (a2) 15 | (b2) - | | | | | | | | | | | | |
| Example 5 | (a1) 85 | (b1) 15 | 8 | 50 | 75 | 15 to 20 | 0.75 | 0.67 | 0.08 | 8.30 | 6.17 | 2.13 | ○ | ○ |
| | (a2) 15 | (b2) - | | | | | | | | | | | | |
| Example 6 | (a1) 85 | (b1) 15 | 2 | 90 | 90 | 15 to 20 | 0.34 | 0.37 | 0.03 | 4.70 | 3.90 | 0.81 | ○ | ○ |
| | (a2) 15 | (b2) - | | | | | | | | | | | | |
| Comparative Example 1 | (a1) 90 | (b1) 15 | 8 | 240 | 105 | 5 to 10 | 0.46 | 0.33 | 0.13 | 5.08 | 2.51 | 2.57 | × | Δ |
| | (a2) 10 | (b2) - | | | | | | | | | | | | |
| Comparative Example 2 | (a1) 85 | (b1) 15 | 2 | 300 | 105 | 5 to 10 | 0.42 | 0.21 | 0.21 | 3.90 | 2.09 | 1.81 | × | × |
| | (a2) 15 | (b2) - | | | | | | | | | | | | |

As described above, in Examples 1 to 6, in which the ranges specified in the present disclosure were satisfied, winding wrinkles and blocking were evaluated as very good.

In contrast, in Comparative Examples 1 and 2, in which the range specified in the present disclosure was not satisfied, winding wrinkles were evaluated as poor. In particular, in Comparative Example 2, blocking was also evaluated as poor.

Although specific embodiments of the present disclosure have been described in the above examples, the above examples are merely illustrative and are not to be construed restrictively. It is contemplated that various modifications apparent to those skilled in the art could be made within the scope of the present disclosure.

### Industrial Applicability

The polyvinyl alcohol-based film of the present disclosure is useful for various packaging applications such as unit packaging applications of chemical agents such as agrochemicals and detergents; (hydraulic) transfer films; sanitary products such as sanitary pads and disposable diapers; waste disposal products such as ostomy bags; medical products such as blood absorbent sheets; and temporary base materials such as germination sheets, seed tapes, and embroidery base fabrics. In particular, the polyvinyl alcohol-based film can be suitably used for unit packaging applications of chemical agents such as laundry detergents and dishwashing detergents.

## Claims

1. A polyvinyl alcohol-based film comprising a polyvinyl alcohol-based resin (A), wherein an absolute value of a difference (|α - β|) between an arithmetic average height (Sa) α of a first surface of the polyvinyl alcohol-based film and an arithmetic average height (Sa) β of a second surface of the polyvinyl alcohol-based film is 0.10 µm or less.

2. The polyvinyl alcohol-based film according to claim 1, wherein the arithmetic average height (Sa) α of the first surface and the arithmetic average height (Sa) β of the second surface are both 2 µm or less.

3. The polyvinyl alcohol-based film according to claim 1 or 2, wherein an absolute value of a difference (|γ - δ|) between a maximum height (Sz) γ of the first surface of the polyvinyl alcohol-based film and a maximum height (Sz) δ of the second surface of the polyvinyl alcohol-based film is 3 µm or less.

4. The polyvinyl alcohol-based film according to claim 1 or 2, wherein the maximum height (Sz) γ of the first surface and the maximum height (Sz) δ of the second surface are both 2 µm or more.

5. The polyvinyl alcohol-based film according to claim 1 or 2, wherein the polyvinyl alcohol-based film comprises a filler.

6. The polyvinyl alcohol-based film according to claim 5, wherein a content of the filler is 1 to 30 parts by mass per 100 parts by mass of the polyvinyl alcohol-based resin (A).

7. The polyvinyl alcohol-based film according to claim 1 or 2, wherein the polyvinyl alcohol-based film has a water content of 3 to 15 mass%.

8. The polyvinyl alcohol-based film according to claim 1 or 2, wherein the polyvinyl alcohol-based film is a water-soluble film.

9. A chemical agent package comprising a package formed of the polyvinyl alcohol-based film according to claim 1 or 2 and a chemical agent packaged in the package.

10. The chemical agent package according to claim 9, wherein the chemical agent is a detergent.

11. The chemical agent package according to claim 10, wherein the detergent is a liquid detergent.

12. A method for producing the polyvinyl alcohol-based film according to claim 1 or 2, the method comprising:
casting a film-forming raw material containing the polyvinyl alcohol-based resin (A) on a cast surface to produce a polyvinyl alcohol-based film, wherein
the polyvinyl alcohol-based film has a water content of 40 mass% or less when the film is peeled off from the cast surface after the film-forming raw material is cast on the cast surface.

13. A method for producing the polyvinyl alcohol-based film according to claim 1 or 2, the method comprising:
casting a film-forming raw material containing the polyvinyl alcohol-based resin (A) on a cast surface to produce a polyvinyl alcohol-based film, wherein
a time between casting of the film-forming raw material on the cast surface and peeling of the polyvinyl alcohol-based film from the cast surface is 180 seconds or less.
